# EUROPÄISCHE PATENTANMELDUNG

(11) **EP 0 858 056 A2**
(43) Veröffentlichungstag der Anmeldung: **12.08.1998**
(21) Anmeldenummer: 97250339.5
(22) Anmeldetag: 13.11.1997
(51) Int. Cl.: G07F 7/08

(54) **Datenträger**

(30) Priorität: 10.01.1997 DE 29700998 U
(71) Anmelder: BUNDESDRUCKEREI GmbH, D-10958 Berlin (DE)
(72) Erfinder: Frauböse, Norbert, 14063 Berlin (DE); Förster, Axel, 14055 Berlin (DE); Rothe, Helmut, 12045 Berlin (DE); Hoeppner, Harald, 12309 Berlin (DE); Märtens, Detlef, 13599 Berlin (DE); Löer, Thomas, 10999 Berlin (DE); Abel, Wolfgang, 12059 Berlin (DE); Ditschler, Ferdinand, 12305 Berlin (DE); Adelt, Herbert, 12205 Berlin (DE); Uebler, Gerhard, 12051 Berlin (DE); Gärtner, Karl-Heinz, 13587 Berlin (DE); Lortz, Michael, 14163 Berlin (DE)
(74) Vertreter: Lüke, Dierck-Wilm, Dipl.-Ing.

(57) **Zusammenfassung**

Die Erfindung bezieht sich auf einen Datenträger, z.B. personalisiertes Wertpapier wie Personalausweis, Scheckkarte u.dgl.,mit Bild- und/ oder Textdaten in codierter und/oder uncodierter Form. Um Fälschungen bzw. Verfälschungen der Daten extrem zu erschweren bzw. zu verhindern sind die Bild- und/oder Textdaten des ersten Datenträgers (1) mindestens teilweise als separate optisch variable Elemente zusätzlich auf dem zweiten, transparent und/oder teiltransparent ausgebildeten Datenträger (2) wiedergegeben.

## Beschreibung

Die Erfindung bezieht sich auf einen Datenträger, z.B. personalisiertes Wertpapier wie Personalausweis, Scheckkarte u.dgl., mit Bild- und/oder Textdaten in codierter und/oder uncodierter Form.

Ein Datenträger in Form eines personalisierten Wertpapieres ist z.B. eine Scheckkarte, die mehrschichtig aus einem Inlett aus Papier/Pappe oder Kunststoff und zwei transparenten Deckfolien gebildet ist. Auf dem Inlett befinden sich Bild- und/oder Textdaten in codierter und/oder uncodierter Form, wie Bank-und Kontobezeichnungen sowie der Name und/oder das Foto des Inhabers der Scheckkarte. Durch den mehrschichtigen Aufbau werden Fälschungen bzw. Verfälschungen der Scheckkarte Zwar erschwert, jedoch nicht vollständig verhindert.

Der Erfindung liegt die Aufgabe zugrunde, einen Datenträger der gattungsgemäßen Art zu schaffen, bei dem Fälschungen bzw. Verfälschungen der Daten extrem erschwert bzw. sogar verhindert werden.

Zur Lösung dieser Aufgabe sieht die Erfindung vor, daß die Bild- und/oder Textdaten des einen Datenträgers mindestens teilweise als separate optisch variable Elemente zusätzlich auf dem anderen, transparent und/oder teiltransparent ausgebildeten Datenträger wiedergegeben sind. Der erfindungsgemäße Datenträger besteht somit aus der Kombination zweier analoger Datenträger, von denen der eine die Bild- und/oder Textdaten in codierter und/oder uncodierter Form und der andere die Bild- und/oder Textdaten mindestens teilweise als separate optische variable Elemente aufweist. Beide analogen Datenträger sind zu einem Datenträger vereinigt, wobei z.B. ein Schichtenaufbau aus dem die Bild- und/oder Textdaten in codierter und/oder uncodierter Form aufweisenden Datenträger und dem die Bild- und/oder Textdaten mindestens teilweise als separate optisch variable Elemente aufnehmenden zusätzlichen Datenträger gebildet ist. Der Datenträger, der die holografischen Informationen enthält, ist transparent und/oder teiltransparent ausgeführt.Die auf dem Datenträger enthaltenen Daten bzw. Informationen sind ganz oder teilweise als separate optisch variable Elemente in Form von Beugungsgittern, Hologrammen und/oder Kinegrammen zusätzlich auf dem transparenten und/oder teiltransparenten Datenträger wiedergegeben.

Der Grundgedanke der Erfindung besteht darin, die variablen und/oder nicht variablen Daten des Datenträgers bzw. Dokuments durch mindestens zwei unterschiedliche Verfahren wiederzugeben. Die beiden Datenträger sind dabei so miteinander kombiniert, daß ein neuer Datenträger gebildet wird. Hierbei ist die dublierte Information die direkte Verknüpfung beider Wiedergabeverfahren, wobei auf dem zusätzlichen transparenten und/oder teiltransparenten Datenträger die physikalischen Eigenschaften von Beugungsgittern genutzt werden, um die Daten bzw. Informationen wiederzugeben.

Die aufzunehmenden bzw. zu übertragenden Daten bzw. Informationen wechseln von Datenträger zu Datenträger bzw. Dokument zu Dokument ihren Inhalt. Es entsteht so in einer Auflage der Höhe n eine entsprechende Anzahl n an Datenträgern bzw. Dokumenten, die neben einer Druckausgabe bzw. einer fotografischen Übertragung bestimmte Daten bzw. Informationen doppelt enthalten, d.h. in dem erfindungsgemäßen Fall als separate, optisch variable Elemente in Form von Beugungsgittern, Hologrammen und/oder Kinegrammen. Dabei können die optisch variablen Elemente zusätzlich durch ein maschinell detektierbares Merkmal gesichert sein.

Die zu verarbeitenden Daten bzw. Informationen werden manuell und/oder maschinell erfaßt, vollständig direkt ausgegeben oder teilweise direkt ausgegeben und teilweise gespeichert und dann ausgegeben bzw. komplett gespeichert und anschließend ausgegeben. Die Datenausgabe erfolgt mit mindestens zwei unterschiedlichen Ausgabeverfahren und entsprechenden Datenträgern, die in separaten Arbeitsgängen zu dem jeweiligen Endprodukt weiterverarbeitet werden.

Durch die Verwendung der erfindungsgemäßen Kombination von Datenträgern können z.B. Sicherheitsprodukte derart mit Absicherungstechnik versehen werden, daß durch das Summieren wiedergabeverfahrenspezifischer Sicherungstechniken Fälschungen bzw. Verfälschungen extrem erschwert bzw. verhindert werden.

Die Erfindung ist nachfolgend anhand eines in den Zeichnungen dargestellten Datenträgers in Form eines mehrschichtigen Personalausweises näher erläutert. Es zeigen:

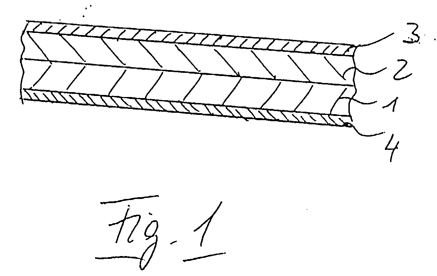

- Fig. 1: einen prinzipiellen Querschnitt durch den Datenträger,
- Fig. 2: die vier Schichten des Datenträgers als Einzelbilder und
- Fig. 3: die vier Schichten des Datenträgers in Explosionsdarstellung.

Der Datenträger 1 ist ein Bedruckstoff bzw. Trägermaterial und besteht z.B. aus Papier/Pappe, Kunststoff, Metall oder einer Kombination von Papier/Pappe, Kunststoff und Metall sowie einem solchen kombinierten Material mit Akzeptorschicht, z.B. fotografische Emulsionen, spezielle Beschichtungen für Druck-, Tintenstrahl-, Thermosublimations-, Thermotransfer-, Xerographie- usw. -verfahren.

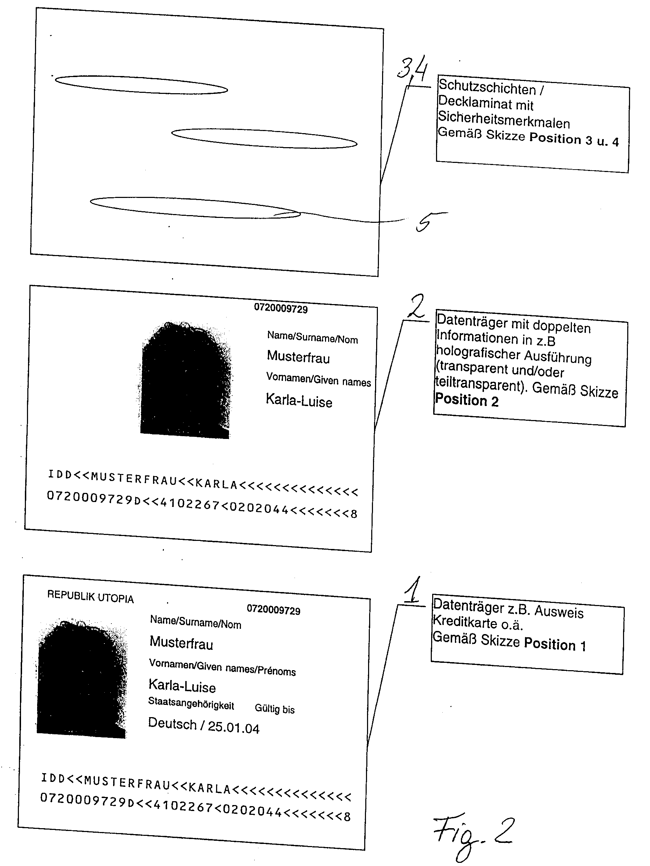

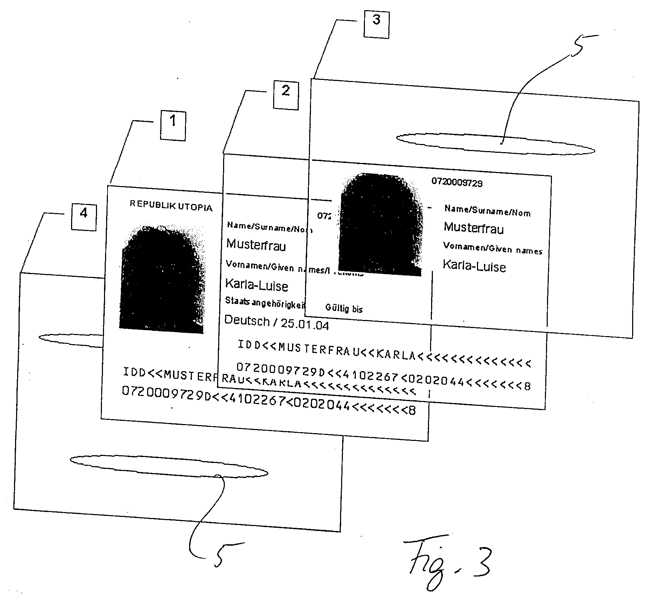

Der aufkaschierte Datenträger 2 ist ein holografischer transparenter und/oder teiltransparenter Träger, z.B. aus Photopolymermaterial, zur Verarbeitung im optisch/digitalen Verfahren, oder eine Folie zur Aufnahme von geprägten holografischen Strukturen zur Bearbeitung mittels mechanischer Verfahren. Die Bild- und/oder Textdaten des Datenträgers 2 sind räumlich versetzt zu den Bild- und/oder Textdaten des Datenträgers 1 angeordnet, wie es aus Figuren 2 und 3 ersichtlich ist.

Die Datenträger 1 und 2 sind in speziellen Verfahren miteinander verbunden, wobei die Datenträger 1 und 2 direkt oder mit Primerschichten wie z.B. Heißsiegel-, Selbstklebe-, Mehrkomponentenkleber und durch reaktive Systeme, wie z.B. UV, IR, Elektronenstrahl usw., verbunden werden.

Die verbundenen Datenträger 1 und 2 können zusätzlich einseitig und/oder zweiseitig mit einer transparenten Schutzschicht 3 und/oder 4 versehen sein, wobei die Schutzschicht 3, 4 aus unterschiedlichen Materialien bestehen kann, wie z.B. ein- oder mehrschichtigen Kunststoff mit Primerschichten, wie z.B. Heißsiegel-, Selbstklebe-, Mehrkomponentenkleber und reaktiven Systemen, wie UV,IR, Elektronenstrahl usw., oder ein-/mehrschichtigen Lacken in Form von Mehrkomponenten- oder reaktiven Systemen, wie UV, IR, Elektronenstrahl usw..

Der Datenträger 1 enthält übliche Sicherheitsmerkmale 5, wie z.B. Wasserzeichen, Melierfasern u.dgl.. Auch die Schutzschichten 3 und 4 können zusätzliche Sicherheitsmerkmale 5 beinhalten.

## Patentansprüche

1. Datenträger, z.B. personalisiertes Wertpapier wie Personalausweis, Scheckkarte u.dgl.,mit Bild- und/oder Textdaten in codierter und/oder uncodierter Form,
**dadurch gekennzeichnet,**
daß die Bild- und/oder Textdaten des ersten Datenträgers (1) mindestens teilweise als separate optisch variable Elemente zusätzlich auf dem zweiten, transparent und/oder teiltransparent ausgebildeten Datenträger (2) wiedergegeben sind.

2. Datenträger nach Anspruch 1,dadurch gekennzeichnet, daß die optisch variablen Elemente in Form von Beugungsgittern auf dem zweiten Datenträger (2) angeordnet sind.

3. Datenträger nach Anspruch 1,dadurch gekennzeichnet, daß die optisch variablen Elemente in Form von Holo- und/oder Kinegrammen auf dem zweiten Datenträger (2) angeordnet sind.

4. Datenträger nach Anspruch 1, dadurch gekennzeichnet, daß die optisch variablen Elemente auf dem zweiten Datenträger (2) räumlich versetzt zu den Bild- oder Textdaten auf dem ersten Datenträger (1) angeordnet sind.

5. Datenträger nach einem der Ansprüche 1 bis 4, dadurch gekennzeichnet, daß die optisch variablen Elemente zusätzlich durch ein maschinell detektierbares Merkmal gesichert sind.

6. Datenträger nach Anspruch 3, dadurch gekennzeichnet, daß das im optisch/digitalen Verfahren erzeugte Hologramm transparent und/oder teiltransparent aus Photopolymermaterial gebildet ist.

7. Datenträger nach Anspruch 3, gekennzeichnet durch eine Folie zur Aufnahme von geprägten holografischen Strukturen zur Aufbringung des Hologramms im mechanischen Verfahren.
